# EUROPÄISCHE PATENTSCHRIFT

(11) **EP 2 012 400 B1**
(45) Veröffentlichungstag und Bekanntmachung des Hinweises auf die Patenterteilung: **14.11.2018**
(21) Anmeldenummer: 08157667.0
(22) Anmeldetag: 05.06.2008
(51) Int. Cl.: H02G 3/08, H02G 15/007, H01R 9/00, H01R 4/64

(54) **Kabelanschlussdose**
Cable connection socket
Boîte de connexion de câble

(30) Priorität: 03.07.2007 DE 202007009291 U
(43) Veröffentlichungstag der Anmeldung: 07.01.2009
(73) Patentinhaber: Electro Terminal GmbH & Co KG, 6020 Innsbruck (AT)
(72) Erfinder: Moser, Peter, 6210 Wiesing (AT); Kreuzbichler, Jürgen, 6067 Absam (AT)
(74) Vertreter: Rupp, Christian

(56) Entgegenhaltungen:
- EP-A1- 0 805 521
- EP-A2- 0 327 703
- DE-A1- 10 155 414

## Beschreibung

Die Erfindung betrifft eine Kabelanschlussdose zur Verbindung der Adern eines Anschlusskabels mit weiterführenden elektrischen Leitungen an einem elektrischen Gerät. Die Kabelanschlussdose weist auf ein Gehäuse-Unterteil und einen Gehäuse-Deckel, eine Kabeldurchführung für das Anschlusskabel, eine Zugentlastung in der Kabeldurchführung zum Arretieren des Anschlusskabels in der Kabelanschlussdose, wenigstens ein Kontaktelement zur Kontaktherstellung des Anschlusskabels, und einen Erdungskontakt.

Das elektrisch leitende Verbinden von Leiterdrähten eines elektrischen Kabels mit einem in einem Gehäuse angeordneten Kontaktelement ist an sich bekannt. Als Kontaktelement werden beispielsweise Schneid- oder Schraubklemmelemente verwendet. Solche Gehäuseanordnungen weisen darüber hinaus ebenfalls Zugentlastungsmittel auf, die ein Herausrutschen des eingelegten Kabels verhindern sollen. Mit derartigen Kabelanschlussgehäusen wird eine elektrische Verbindung zwischen einem Leiter und einem elektronischen Bauteil, wie bspw. einem Betriebselement von Leuchtkörpern, gewährleistet.

Als Zugentlastungsmittel ist beispielsweise ein über der Kabeldurchführung angeordneter Steg bekannt, der mittels Schrauben links und rechts der Kabeldurchführung befestigt wird und so das Kabel zwischen Gehäuse und Steg einklemmt. In anderen Fällen wird der Zugentlastungsbügel in das Gehäuse eingerastet, so dass dieser nur noch durch Zerstörung wieder zu öffnen ist.

Schraubklemmanschlüsse werden üblicherweise mit geschlossener, also angezogener Schraube ausgeliefert, um zu verhindern, dass die Schrauben verloren gehen. Diese sind meist fest angezogen und müssen zum Einlegen des Kabels von dem komplett geschlossenen Zustand in den geöffneten Zustand gebracht, also gedreht werden.

Des Weiteren weisen Kabelanschlussdosen als Erdkontakt häufig von innerhalb des Gehäuses einzuschraubende Schrauben auf. Der Anschlussbereich ist somit bei bereits montiertem Kabel nur schwer zugänglich. Zudem muss die Erdung erst befestigt werden, bevor das Gehäuse geschlossen wird. Außerdem muss ein gesonderter Schraubvorgang ausgeführt werden, um den Erdungskontakt sicher herzustellen.

Aus der DE 34 30 756 C2 ist ein Kabelanschlusskasten bekannt, der in einer Längsseite eines seitlichen Randes eine Öffnung für einen Erdungsbügel aus einem abgewinkelten und mit entsprechenden Bohrungen versehenen Stanzteil vorsieht, welches mit einer zugehörigen Klemmschraube befestigt ist und über eine Erdungsschraube mit einer metallischen Gerätewand verbunden ist.

Die DE 43 04 525 C2 wiederum zeigt eine Anordnung einer Anschlussdose zum Anschließen elektrischer Zuführungskabel, in der ein Anschlussklemmblock vormontierbar ist, welcher eine Anschlussklemme für das Erdungspotential mit Befestigungsöse aufweist, die wiederum durch eine Schraube an einem metallischen Teil eines Gehäuses befestigbar ist, wodurch gleichzeitig die Anschlussdose befestigt wird.

Die EP 0 805 521 A1 offenbart ein aus einem Materialstreifen gebogenes elektrisches Kontaktelement als Erdungsteil, wobei ein erstes Ende des Kontaktelementes in eine Ausnehmung einer Leiterplatte zumindest hintergreift, und wobei ein zweites Ende aus der Ebene des ersten Endes derart herausgebogen ist, dass das Kontaktelement im Bereich des zweiten Endes nach dem Einsetzen der Leiterplatte in ein Gehäuse federnd an dem Gehäuse anliegt. Im Mittelbereich des Kontaktelements ist zwischen dem ersten und zweiten Ende mindestens ein Ausriss herausgebogen, der nach dem Einsetzen der Leiterplatte in das Gehäuse eine Masse-Leiterfläche der Leiterplatte elektrisch kontaktiert.

Dementsprechend ist es Aufgabe der Erfindung das Montieren der Kabelanschlussdose zu vereinfachen.

Diese Aufgabe wird durch die Merkmale des unabhängigen Anspruchs geschützt. Die abhängigen Ansprüche bilden den zentralen Gedanken der Erfindung in besonders vorteilhafter Weise weiter.

Gemäß einem ersten Aspekt der Erfindung weist die Kabelanschlussdose zur Verbindung der Adern eines Anschlusskabels mit weiterführenden elektrischen Leitungen an einem elektrischen Gerät auf, ein Gehäuse-Unterteil und einen Gehäuse-Deckel, wenigstens ein Kontaktelement des Anschlusskabels, aufweisend wenigstens ein Stanzteil zur Kontaktherstellung, und ein Erdungungskontakt. Der Erdungskontakt erstreckt sich an der Unterseite des Gehäuse-Unterteils von dem Gehäuse-Unterteil weg, und der Erdungskontakt ist als Direkterdung ausgelegt.

Vorteilhafterweise ist der Erdungskontakt bogenförmig ausgebildet und erstreckt sich von der Unterseite des Gehäuse-Unterteils weg und wieder zu diesem zurück.

Ferner vorteilhafterweise ist das sich zurückerstreckende Ende des Erdungskontakts in das Gehäuse-Unterteil eingerastet.

Vorzugsweise erstreckt sich der Erdungskontakt bis zum Stanzteil. Mit seinem dem Stanzteil abgewandten Ende erstreckt sich der Erdungskontakt vorteilhafterweise in das Gehäuse-Unterteil hinein und wird von dem Gehäuse-Unterteil gehalten.

Vorteilhafterweise ist der Erdungskontakt integral mit dem Stanzteil ausgebildet.

Gemäß einem zweiten Aspekt der Erfindung weist die Kabelanschlussdose zur Verbindung der Adern eines Anschlusskabels mit weiterführenden elektrischen Leitungen an einem elektrischen Gerät auf, ein Gehäuse-Unterteil und einen Gehäuse-Deckel, eine Kabeldurchführung für das Anschlusskabel, eine Zugentlastung in der Kabeldurchführung zum Arretieren des Anschlusskabels in der Kabelanschlussdose, und wenigstens ein Kontaktelement zur Kontaktherstellung des Anschlusskabels. Die Zugentlastung weist einen drehbar gelagerten Zugentlastungsbügel auf, an dem integral wenigstens ein Rastelement ausgebildet ist, zum Einrasten des Zugentlastungsbügels in das Gehäuse-Unterteil und bei eingelegtem Kabel in wenigstens einer Rastposition.

Vorteilhafterweise sind an dem Zugentlastungsbügel zwei Rastelemente ausgebildet, wobei die Rastelemente in eine im Gehäuse-Unterteil ausgebildeten Aussparung derart einrasten, dass sich der Zugentlastungsbügel in einer ersten Rastposition befindet, wenn das erste Rastelement in die Aussparung eingerastet ist, und sich der Zugentlastungsbügel in einer zweiten, von der ersten unterschiedlichen Rastposition befindet, wenn das zweite Rastelement in dieser Aussparung eingerastet ist.

Ferner vorteilhafterweise ist die Aussparung in einem Halteelement des Gehäuse-Unterteils derart ausgebildet, dass die Aussparung das Halteelement von der Kabeldurchführung weg durchläuft.

Gemäß einem dritten Aspekt der Erfindung weist die Kabelanschlussdose zur Verbindung der Adern eines Anschlusskabels mit weiterführenden elektrischen Leitungen an einem elektrischen Gerät auf, ein Gehäuse-Unterteil und einen Gehäuse-Deckel, eine Kabeldurchführung für das Anschlusskabel, eine Zugentlastung in der Kabeldurchführung zum Arretieren des Anschlusskabels in der Kabelanschlussdose, und wenigstens ein Kontaktelement zur Kontaktherstellung des Anschlusskabels. Die Zugentlastung weist einen drehbar gelagerten Zugentlastungsbügel auf, an dem integral wenigstens eine Lasche ausgebildet ist, die in geöffnetem Zustand des Zugentlastungsbügels mit einem an dem Gehäuse-Unterteil integral ausgebildetem federnden Element eingerastet ist, so dass der Zugentlastungsbügel in dieser geöffneten Position gehalten wird.

Vorteilhafterweise weist der Zugentlastungsbügel eine im Wesentlichen dreieckige Form auf, dessen Spitze sich bei geschlossenem Zugentlastungsbügel in den Bereich der Kabeldurchführung hinein erstreckt.

Vorteilhafterweise ist der Zugentlastungsbügel am Kunststoffgehäuse mitgespritzt.

Ferner vorteilhafterweise bilden die Laschen nach dem Spritzgießvorgang die Verbindung zwischen Gehäuse und Zugentlastungsbügel.

Gemäß einem vierten Aspekt der Erfindung weist die Kabelanschlussdose zur Verbindung der Adern eines Anschlusskabels mit weiterführenden elektrischen Leitungen an einem elektrischen Gerät auf: ein Gehäuse-Unterteil und einen Gehäuse-Deckel, und wenigstens ein Kontaktelement des Anschlusskabels, aufweisend wenigstens ein Schraubklemmelement und ein Stanzteil zur Kontaktherstellung. Ein erster Verbinder des Stanzteils ist derart abgeschrägt und ein Bremssteg an dem abgeschrägten Bereich des ersten Verbinders im Gehäuse-Unterteil derart integral ausgebildet, dass das Schraubklemmelement bei eingelegtem Stanzteil in das Gehäuse-Unterteil auf dem Bremssteg aufliegt.

Die hier beschriebene Kabelanschlussdose gemäß einem ersten Aspekt der Erfindung weist einen Erdungskontakt auf, der sich an der Unterseite des Gehäuse-Unterteils von dem Gehäuse-Unterteil weg erstreckt, und der als Direkterdung ausgelegt ist.

Aufgrund des Anschlusses mit Direkterdung, also eines schraublosen Erdungskontakts, werden zum einen gar keine Schrauben mehr benötigt. Dies hat zum einen den Vorteil, dass weniger Teile benötigt werden, und zum anderen den Vorteil, dass die Erdung unabhängig davon ist, ob bereits ein Kabel eingelegt ist oder nicht. Da also die Montage der Erdung entfällt, kann die Kabelanschlussdose direkt fertig eingebaut werden. Somit wird das Anschließen der Kabelanschlussdose erheblich erleichtert im Vergleich zu einer Kabelanschlussdose mit konventionellem Schraubanschluss.

Des Weiteren ist der Erdungskontakt vorzugsweise bogenförmig ausgebildet und erstreckt sich von der Unterseite des Gehäuse-Unterteils weg und wieder zu diesem zurück.

Durch die zurückgebogene Form des Erdungskontakts ensteht eine stabile und breite Kontaktfläche, um sicher einen Direkterdungskontakt zu gewährleisten.

Außerdem ist das sich zurückerstreckende Ende des Erdungskontakts vorzugsweise in das Gehäuse-Unterteil eingerastet.

Dadurch kann das sich zurückerstreckende Ende des Erdungskontakts in dem Gehäuse-Unterteil beispielsweise mittels eines am Ende des Erdungskontakts ausgeformten Keilbereichs eingeratstet werden. Auf diese Weise ist der Erdungskontakt sicher an dem Gehäuse-Unterteil befestigt.

Des Weiteren erstreckt sich der Erdungskontakt vorzugsweise bis zum Stanzteil.

Es ist somit einfach möglich, einen Kontakt zwischen einem Kabel und dem Erdungskontakt, beispielsweise durch einfaches Anziehen der Schraubklemmelemente, herzustellen.

Ferner erstreckt sich der Erdungskontakt vorteilhafterweise mit seinem dem Stanzteil abgewandten Ende in das Gehäuse-Unterteil hinein und wird von dem Gehäuse-Unterteil gehalten.

Somit wird eine zusätzlich Halterung für den Erdungskontakt gegeben, um diesen sicher und stabil in der Kabelanschlussdose zu befestigen. Die Halterung kann ferner als Schwenkpunkt dienen, um den Erdungskontakt einfach in die Kabelanschlussdose mittels einer Schwenkbewegung einzusetzen.

Der Erdungskontakt ist ferner vorteilhafterweise integral mit dem Stanzteil ausgebildet.

Auf diese Weise werden einerseits Bauteile und somit Kosten gespart, und andererseits wird die Anzahl der Montageschritte reduziert und die Montage dadurch erleichtert.

Die hier beschriebene Kabelanschlussdose gemäß einem zweiten Aspekt der Erfindung weist eine Zugentlastung mit drehbar gelagertem Zugentlastungsbügel auf, an dem integral wenigstens ein Rastelement zum Einrasten der Zugentlastung in das Gehäuse-Unterteil und bei eingelegtem Leiter in wenigstens einer Rastposition ausgebildet ist. Auf diese Weise wird auf einfache Weise ein Rastelement zur Verfügung gestellt.

Somit ist es einfach möglich, durch Schwenken des Zugentlastungsbügels diesen in dem Gehäuse-Unterteil einzurasten und somit schnell und einfach die Zugentlastung zu schließen und ein Herausrutschen des eingelegten Kabels zu verhindern. Der Einsatz von Schrauben entfällt gänzlich, sodass einerseits der Arbeitsaufwand zum Schließen und Einstellen des Zugentlastungsbügels verringert und andererseits auch die Anzahl der Bauteile reduziert wird. Somit wird auf einfache Weise ein drehbar gelagerter Zugentlastungsbügel mit Rastfunktion zur Verfügung gestellt.

Des Weiteren sind an dem Zugentlastungsbügel zwei Rastelemente ausgebildet, wobei die Rastelemente in eine im Gehäuse-Unterteil ausgebildeten Aussparung derart einrasten, dass sich der Zugentlastungsbügel in einer ersten Rastposition befindet, wenn das erste Rastelement in die Aussparung eingerastet ist, und sich der Zugentlastungsbügel in einer zweiten, von der ersten unterschiedlichen Rastposition befindet, wenn das zweite Rastelement in dieser Aussparung eingerastet ist.

Somit wird auf einfache Weise ermöglicht, mehrere Rastpositionen durch einfaches Schwenken des Zugentlastungsbügels einzustellen, indem dieser beispielsweise bei einem großen Leiter in die erste Rastposition und bei einem kleinen Leiter über die erste Rastposition hinaus in die zweite Rastposition gebracht wird. Schrauben werden nicht mehr benötigt und die Teileanzahl und somit auch die Herstellungskosten können reduziert werden.

Zudem ist die Aussparung in einem Halteelement des Gehäuse-Unterteils vorteilhafterweise derart ausgebildet, dass die Aussparung das Halteelement von der Kabeldurchführung weg durchläuft.

Auf diese Weise wird erreicht, dass ein zuvor geschlossener und im Gehäuse-Unterteil eingerasteter Zugentlastungsbügel einfach durch seitliches Einführen beispielsweise eines Schraubendrehers in die Aussparung und durch Zurückbiegen des Rastelements aus der Rastposition gelöst und wieder geöffnet werden kann. Es müssen somit keine Schrauben gelöst oder gar der Zugentlastungsbügel zerstört werden.

Die hier beschriebene Kabelanschlussdose gemäß einem dritten Aspekt der Erfindung weist eine Zugentlastung mit drehbar gelagertem Zugentlastungsbügel auf, an dem integral wenigstens eine Lasche ausgebildet ist, die in geöffnetem Zustand des Zugentlastungsbügels mit einem an dem Gehäuse-Unterteil integral ausgebildeten, federnden Element eingerastet ist, so dass der Zugentlastungsbügel in dieser geöffneten Position gehalten wird.

Auf diese Weise wird es ohne zusätzliche Mittel ermöglicht, den Zugentlastungsbügel, beispielsweise während des Transports, in einem geöffneten Zustand zu halten, so dass dieser an seinem Bestimmungsort direkt verbaut werden kann. Da der Zugentlastungsbügel somit bereits bei der Auslieferung auf dem Gelenk befestigt ist, kann auf eine zusätzliche Verliersicherung verzichtet werden. Ferner muss der Zugentlastungsbügel nicht erst auf das Gelenk gesteckt werden, bevor die Kabelanschlussdose verbaut wird. Dies führt somit zu einer verbesserten und vereinfachten Handhabung der Kabelanschlussdose.

Des Weiteren weist der Zugentlastungsbügel eine im Wesentlichen dreieckige Form auf , dessen Spitze sich bei geschlossenem Zugentlastungsbügel in den Bereich der Kabeldurchführung hinein erstreckt.

Durch die sich in den Bereich der Kabeldurchführung erstreckende Spitze des Bügelarms des Zugentlastungsbügels drückt die Spitze derart mittig auf das in der Kabeldurchführung verlaufende Kabel, dass durch den erhöhten Druck die Zugentlastung verbessert wird und ein Herausziehen oder Herausrutschen des Kabels aus der Kabelanschlussdose sicher verhindert wird.

Überdies ist der Zugentlastungsbügel vorteilhafterweise am Kunststoffgehäuse mitgespritzt.

Dies hat den Vorteil, dass Arbeitsschritte bei der Herstellung der Kabelanschlussdose eingespart werden. Gleichzeitig bilden die das Kunststoffgehäuse und den Zugentlastungsbügel verbindenden Bereiche die Laschen zum Arretieren des Zugentlastungsbügels am Kunststoffgehäuse in einem geöffneten Zustand im Auslieferungszustand. Die Laschen sind so gebildet, dass sie nach Abreissen des Zugentlastungsbügels von dem Kunststoffgehäuse am Zugentlastungsbügel integral ausgebildete Laschen sind. Eine zusätzliche Bearbeitung der Kunststoffteile entfällt somit ebenfalls.

Die hier beschriebene Kabelanschlussdose gemäß einem vierten Aspekt der Erfindung weist ein Stanzteil des Kontaktelements mit einem ersten Verbinder auf, der derart abgeschrägt und ein Bremssteg an dem abgeschrägten Bereich des ersten Verbinders im Gehäuse-Unterteil derart integral ausgebildet ist, dass das Schraubklemmelement bei eingelegtem Stanzteil in das Gehäuse-Unterteil auf dem Bremssteg aufliegt.

Durch den abgeschrägten ersten Verbinder des Stanzteils ist es möglich, einen Bremssteg im Kunststoffgehäuse direkt zu integrieren, das heißt der Bremssteg wird vorzugsweise direkt mit dem Gehäuse mitgespritzt. Da der Schraubenkopf über das Niveau des Stanzteils hinausragt, kommt der Bremssteg im Spritzteil, also im Gehäuse-Unterteil, zur Wirkung. Auf diese Weise kann das Kontaktelement beziehungsweise das Schraubklemmelement mit geöffneter Schraube ausgeliefert werden. Somit wird das Lösen der Schraube im Auslieferungszustand deutlich vereinfacht und die Anzahl der benötigten Schraubdrehbewegungen, um die Schraube in einen Zustand zu bringen, indem ein Leiterdraht eingelegt werden kann, reduziert sich ebenfalls. Das Anschließen der Leiterdrähte wird somit vereinfacht im Vergleich dazu, dass die Schraube im Auslieferungszustand auf dem Stanzteil festgezogen ist.

Weitere Merkmale, Vorteile und Eigenschaften der Erfindung sollen nunmehr anhand von Ausführungsbeispielen und der Figuren der begleitenden Zeichnungen erläutert werden.
- Figur 1: zeigt eine erfindungsgemäße Kabelanschlussdose in der Draufsicht mit geöffnetem Zugentlastungsbügel.
- Figur 2: zeigt eine erfindungsgemäße Kabelanschlussdose in der Draufsicht mit eingelegtem Kabel und geschlossenem Zugentlastungsbügel.
- Figur 3: zeigt eine erfindungsgemäßes Stanzteil in der Draufsicht.
- Figur 4: zeigt eine Schnittansicht entlang der Schnittlinie A-A der erfindungsgemäßen Kabelanschlussdose aus Figur 1.
- Figur 5: zeigt ein Ansicht der Unterseite der geschlossene Kabelanschlussdose.
- Figur 6: zeigt eine Schnittansicht entlang der Schnittlinie B-B der erfindungsgemäßen Kabelanschlussdose aus Figur 1.
- Figur 7: zeigt eine Schnittansicht entlang der Schnittlinie C-C der erfindungsgemäßen Kabelanschlussdose aus Figur 2.
- Figur 8: Kunststoffgehäuse und Zugentlastungsbügel nach dem Spritzgießvorgang

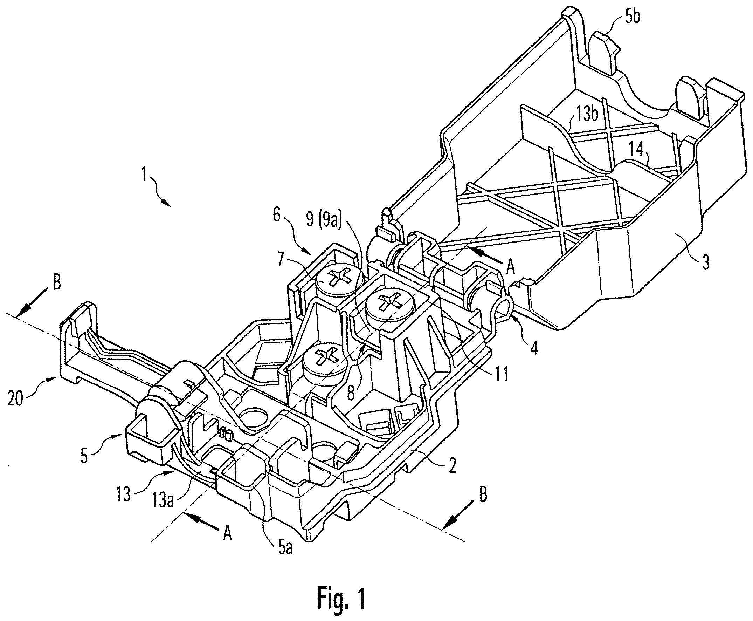

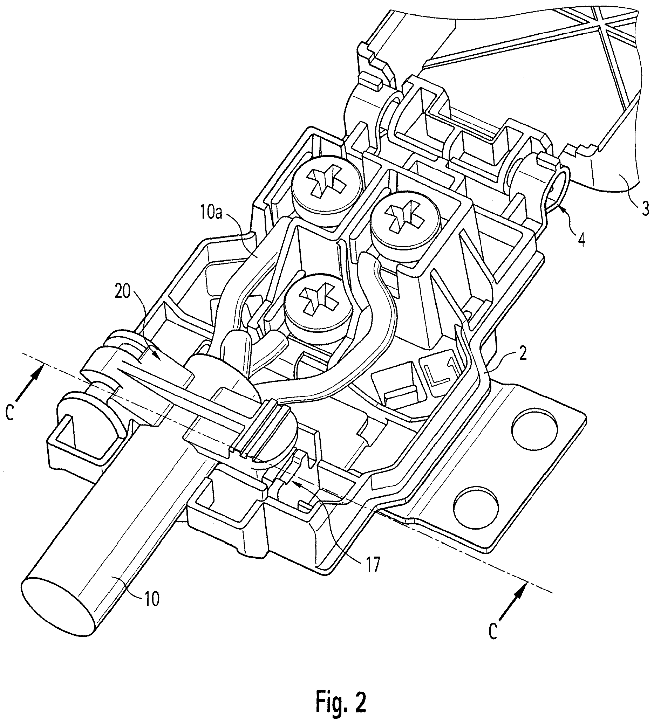

Figuren 1 und 2 zeigen ein Ausführungsbeispiel einer Kabelanschlussdose 1 zur Verbindung der Adern, im Folgenden auch Leiterdrähte genannt, eines Anschlusskabels mit weiterführenden elektrischen Leitungen beispielsweise an einem elektrischen Gerät. Die Kabelanschlussdose weist ein Gehäuse-Unterteil 2 und einen Gehäuse-Deckel 3 auf. Die beiden Gehäuseteile 2, 3 sind dabei vorzugsweise mittels eines Gelenks 4 schwenkbar gelagert.

Vorzugsweise sind die Gehäuseteile 2, 3 Spritzgussteile, und in besonders vorteilhafter Weise werden die Gehäuseteile 2, 3 in einem Spritzgießvorgang fertig gespritzt. Dadurch werden Arbeitsschritte, wie beispielsweise das Zusammenfügen der Gehäuseteile 2, 3 nach dem Spritzgießvorgang, eingespart.

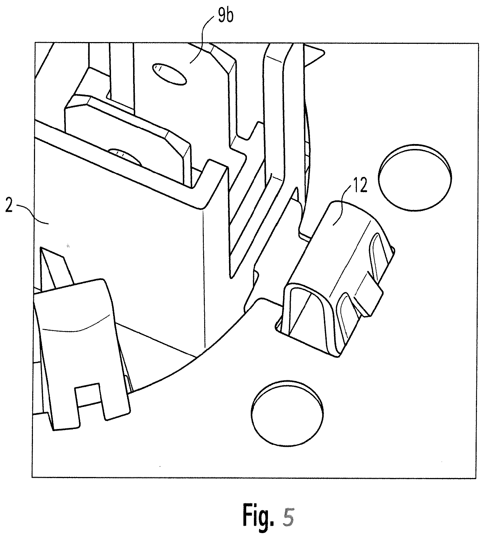

Des Weiteren weisen die Gehäuseteile 2, 3 vorzugsweise einen Schließmechanismus 5 auf (Fig. 5), wobei an dem Gehäuse-Unterteil 2 eine Falle 5a und am Gehäuse-Deckel 3 ein im geschlossenen Zustand der Gehäuseteile 2, 3 in die Falle 5a einrastbarer Riegel 5b angeordnet ist. Auch der Schließmechanismus ist vorzugsweise integral mit dem Gehäuse-Unterteil 2 beziehungsweise dem Gehäuse-Deckel 3 ausgebildet.

Die Kabelanschlussdose 1 weist ferner wenigstens ein, vorzugsweise drei Kontaktelemente 6 auf. Das Kontaktelement 6 weist ein Kontaktklemmelement sowie ein Kontaktteil, im Weiteren auch Stanzteil 9 genannt, auf.

Als Kontaktklemmelement werden vorzugsweise Schraubklemmelemente 7 verwendet. Diese sind in dafür vorgesehene und vorzugsweise integral mit dem Gehäuse-Unterteil 2 ausgebildete Kammern 8 eingeschraubt.

Das Stanzteil 9 erstreckt sich von der Kammer 8 zur Unterseite des Gehäuse-Unterteils 2 und dient zur Kontaktherstellung der Kabelanschlussdose 1 mit beispielsweise einem elektrischen Gerät. Das Stanzteil 9 weist dazu vorzugsweise einen ersten, in der Kammer 8 angeordneten Verbinder 9a sowie einen zweiten, sich durch das Gehäuse-Unterteil 2 durch und von der Rückseite des Gehäuse-Unterteils 2 weg erstreckenden Verbinder 9b auf (Fig. 5).

Mittels des Schraubklemmelements 7 wird ein Leiterdraht 10a eines Kabels 10 derart in der Kammer 8 befestigt, dass der Leiterdraht 10a mit dem ersten Verbinder 9a des Stanzteils 9 in Kontakt steht. Der zweite Verbinder 9b dient zur Kontaktherstellung beispielsweise mit einem elektrischen Gerät. Ein derartiges Kontaktelement 6 ist vorteilhaft für ein schnelles und einfaches Montieren einer Kabelanschlussdose 1.

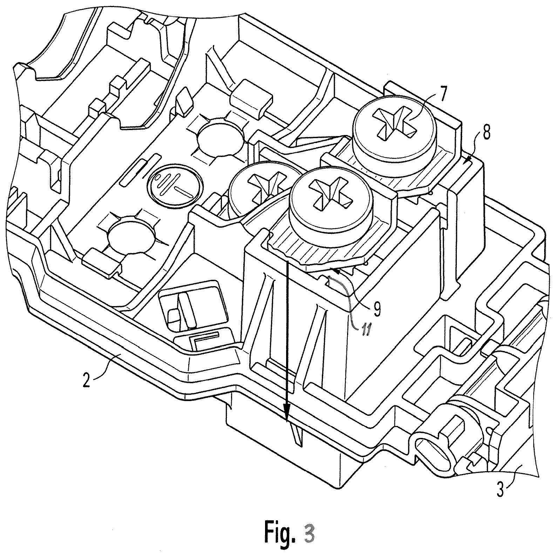

Wie Figur 3 zeigte weist der erste Verbinder 9a des Stanzteils 9 eine im Wesentliche viereckige Form auf, wobei vorzugsweise eine der vier Ecken abgeschrägt ist. In der Kammer 8 ist ein Bremssteg 11 derart integral mit dem Gehäuse-Unterteil 2 ausgebildet, dass das Schraubklemmelement 7 auf dem Bremssteg 11 aufliegt, wenn das Stanzteil in die Kammer 8 eingesetzt ist. Der Bremssteg 11 ist dabei vorzugsweise an einer Seitenwand der Kammer 8 ausgebildet, an der sich die abgeschrägte Ecke des Stanzteils 9 befindet, wenn das Stanzteil 9 in die Kammer 8 eingesetzt ist. Somit erstreckt sich der Bremssteg 11 senkrecht zur Einschraubrichtung des Schraubklemmelements 7 über das Stanzteil 9. Auf diese Weise entsteht ein kleiner Spalt zwischen Schraubklemmelement 7 und Stanzteil 9.

Durch das abgeschrägte Stanzteil 9 ist es somit möglich, den Bremssteg 11 im Gehäuse-Unterteil 2 direkt zu integrieren. Der Bremssteg 11 wird also vorzugsweise direkt mit dem Gehäuse-Unterteil 2 mitgespritzt. Da der Kopf des Schraubklemmelements 7 über das Niveau des Stanzteils 9 hinausragt, kommt der Bremssteg 11 im Gehäuse-Unterteil 2 zur Wirkung. Auf diese Weise kann das Kontaktelement 6, beziehungsweise das Schraubklemmelement 7 mit geöffneter Schraube ausgeliefert werden. Das Lösen des Schraubklemmelements 7 im Auslieferungszustand wird somit deutlich vereinfacht und die Anzahl der benötigten Schraubdrehbewegungen, um das Schraubklemmelement 7 in einen geöffneten Zustand zu bringen, also einen Zustand, in dem ein Leiterdraht 10a eingelegt werden kann, wird ebenfalls reduziert. Das Anschließen der Leiterdrähte 10a in der Kabelanschlussdose 1 wird somit vereinfacht.

Die Kabelanschlussdose 1 weist ferner einen Erdungskontakt 12 auf. Dieser Erdungskontakt 12 ist vorzugsweise als "Push In Earth Contact", PIEC, also als Direkterdung ausgelegt. Der Erdungskontakt 12 ist dabei vorzugsweise integral mit wenigstens einem der Stanzteile 9 ausgebildet, er kann aber auch als einzelnes Stanzbiegeteil hergestellt und dann in die Kabelanschlussdose 1 eingesetzt sein. Der Erdungskontakt 12 wird im Weiteren noch näher beschrieben.

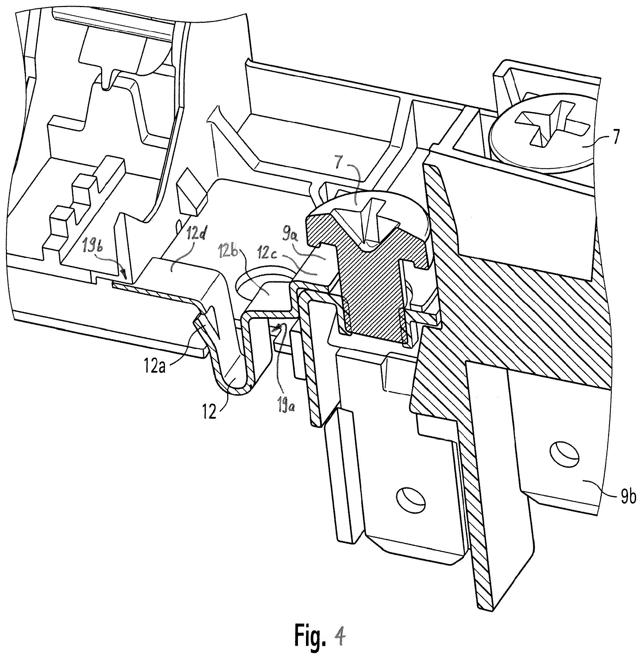

Figur 4 zeigt eine Schnittansicht durch die Schnittlinie A-A in Figur 1. In Figur 4 ist der Erdungskontakt 12 zu erkennen, welcher als einzelnes Teil in das Gehäuse-Unterteil 2 eingesetzt ist oder vorzugsweise integral mit einem der Stanzteile 9 ausgebildet ist. Der Erdungskontakt 12 erstreckt sich vorzugsweise durch eine Öffnung 19a an der Unterseite des Gehäuse-Unterteils 2 von dem Gehäuse-Unterteil 2 weg, so dass der Erdungskontakt 12 von dem Gehäuse-Unterteil 2 absteht. Ferner vorzugsweise ist der Erdungskontakt 12 dabei bogenförmig ausgebildet, so dass er sich zunächst von der Unterseite des Gehäuse-Unterteils 2 weg und bogenförmig wieder zu diesem zurück erstreckt. Mit dem sich zurückerstreckenden Ende des Erdungskontakts 12 kann dieser in dem Gehäuse-Unterteil 2 mittels eines am Ende des Erdungskontakts 12 ausgeformten Keilbereich 12a eingeratstet werden und ist somit an dem Gehäuse-Unterteil 2 sicher befestigt.

Vorzugsweise von dem dem Keilbereich 12a gegenüberliegenden Ende des Erdungskontaktes 12 erstreckt sich der Erdungskontakt 12 mit einem Kontaktbereiche 12c über einen Verbindungsbereich 12b in wenigstens eine der Kammern 8 hinein. Der Kontaktbereiche 12c ist dabei zwischen dem entsprechenden ersten Verbinder 9a des Stanzteils 9 und dem jeweiligen Schraubklemmelement 7 angeordnet oder direkt integral mit dem Stanzteil 9 ausgebildet, so dass der Kontaktbereich 12c folglich dem ersten Verbinder 9a entspricht. Auf diese Weise wird einfach und mit geringer Teileanzahl ein Erdungskontakt der Kabelanschlussdose 1 hergestellt.

In einer bevorzugten Ausgestaltungsform erstreckt sich das Ende des Erdungskontaktes 12, an dem sich auch der Keilbereich 12a befindet, also vorzugsweise das dem Kontaktbereich 12c gegenüberliegende Ende bzw. das der Kammer 8 bzw. dem Stanzteil 9 abgewandte Ende des Erdungskontaktes 12, in das Gehäuse-Unterteil 2 mit einem Klemmbereich 12d derart hinein, dass ein Haltebereich 19b des Gehäuse-Unterteils 2, welcher vorzugsweise integral mit diesem ausgebildet ist, ein Gegenlager für den Erdungskontakt 12 bildet. In einer besonders bevorzugten Ausgestaltungsform kann der Erdungskontakt 12 somit mit seinem Klemmbereich 12d auf der Innenseite des Gehäuse-Unterteils 2 in den Haltebereich 19b eingeführt werden. Durch Schwenken des Erdungskontaktes 12 in Richtung Gehäuse-Unterteil 2 um den Haltebereich 19b als Schwenkpunkt herum, gleitet der bogenförmige Bereich des Erdungskontaktes 12 durch die Öffnung 19a in dem Gehäuse-Unterteil 2 und rastet schließlich mit dem Keilbereich 12a in dem Gehäuse-Unterteil 2 ein. Gleichzeitig gleitet der Klemmbereich 12d in die Kammer 8 ein und kommt dort in Kontakt mit dem Stanzteil 9 bzw. bei integraler Ausgestaltung des Stanzteils 9 und des Erdungskontaktes 12 wird das Stanzteil 9 mit dem Klemmbereich 12d des Erdungskontaktes 12 in die Kammer 8 eingeführt. Durch das Zusammenspiel des Gegenlagers in Form des Haltebereichs 19 mit dem Keilbereich 12a sowie des Schraubklemmkontaktes 7 wird der Erdungskontakt 12 sicher und fest in der Kabelanschlussdose 1 angebracht und gehaltert, so dass eine Direkterdung der Kabelanschlussdose 1 schnell und einfach möglich ist.

Aufgrund des Anschlusses mit Direkterdung ist der Erdungskontakt 12 als schraubloser Erdungskontakt
ausgebildet. Es kann somit gänzlich auf Schrauben zur Erdung verzichtet werden, da der Erdungskontakt 12 sicher in der Kabelanschlussdose 1 befestigt ist und eine Erdung direkt durch den Einbau der Kabelanschlussdose 1 eben mittels eines Direktkontaktes des bogenförmigen Bereiches des Erdungskontaktes 12 hergestellt werden kann, und die Teileanzahl wird folglich reduziert sowie der Arbeitsaufwand zum Befestigen des Erdungskontakts 12 verringert. Ferner ist die Erdung unabhängig davon, ob bereits ein Kabel 10 eingelegt ist oder nicht, da ein eingelegtes Kabel 10 die PIEC, also die schraublose Direkterdung, nicht behindert. Dies liegt insbesondere daran, dass der Erdungskontakt 12 nicht z.B. von der Innenseite der Kabelanschlussdose 1 oder auf sonstige Weise mittels einer Schraube mit der Erdung verbunden werden muss. Eine gesonderte Montage zur Verbindung der Erdung entfällt somit komplett, da die Erdung durch Montage der Kabelanschlussdose 1 direkt hergestellt wird. Somit kann die Kabelanschlussdose 1 direkt und einfach fertig eingebaut werden, wodurch das Anschließen der Kabelanschlussdose 1 erheblich erleichtert wird.

Weiterhin vorteilhaft ist die bevorzugte zurückgebogene Form des Erdungskontakts 12, mit Hilfe derer ein Ende des Erdungskontakts 12 in das Gehäuse-Unterteil 2 sicher eingeratstet werden kann und vorzugsweise auch ein weiterer Klemmbereich 12d in dem Gehäuse-Unterteil 2 zusätzlich gehalten wird. Auf diese Weise ist der Erdungskontakt 12 sicher an dem Gehäuse-Unterteil 2 befestigt.

Figur 5 zeigt ein Ansicht der Unterseite der geschlossenen Kabelanschlussdose 1, in der die sich von der Unterseite erstreckenden zweiten Verbinder 9b sowie der Erdungskontakt 12 gezeigt sind.

Die Kabelanschlussdose 1 weist ferner eine vorzugsweise integral mit den Gehäuseteilen 2, 3 ausgebildete Kabeldurchführung 13 für das Kabel 10 auf. Die Kabeldurchführung 13 weist dabei vorzugsweise einen in dem Gehäuse-Unterteil 2 integral ausgebildeten, halbkreisförmigen Bereich 13a sowie eine Aussparung 13b in einer quer zur Einführungsrichtung des Kabels 10 sich erstreckenden Verstärkung 14 im Gehäuse-Deckel 3.

Zur sicheren Befestigung und Arretieren eines eingelegten Kabels 10 in der Kabelanschlussdose 1 weist die Kabelanschlussdose 1, genauer das Gehäuse-Unterteil 2, im Bereich der Kabeldurchführung 13 (13a) vorzugsweise eine Zugentlastung 20, im Weiteren auch Zugentlastungsbügel genannt, auf.

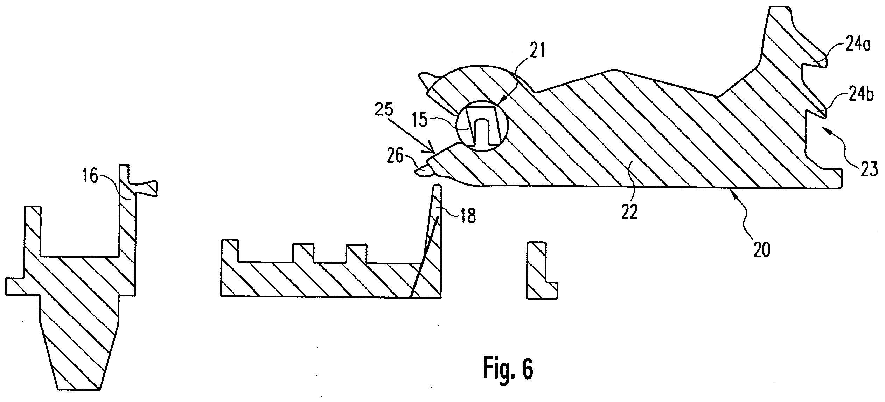

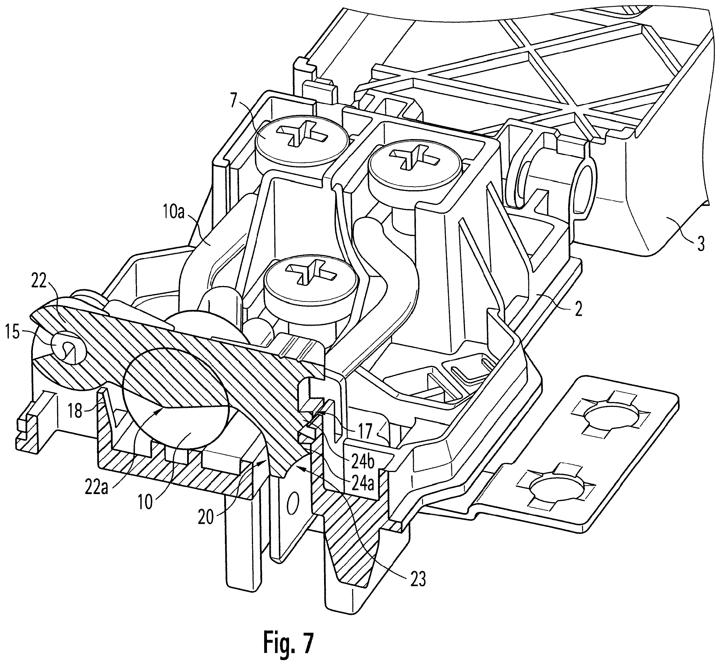

Figur 6 zeigt eine Schnittansicht entlang der Schnittlinie B-B der erfindungsgemäßen Kabelanschlussdose aus Figur 1. In Figur 6 ist der Zugentlastungsbügel 20 in einem geöffneten Zustand dargestellt. Der Zugentlastungsbügel 20 weist vorzugsweise einen Scharnierbereich 21 auf, mit dem er an einem Schwenkteil 15 des Gehäuse-Unterteils 2 schwenkbar gelagert ist. Der Scharnierbereich 21 ist im Wesentlichen buchsenförmig. Von dem Scharnierbereich 21 erstreckt sich ein Bügelarm 22. Dieser ist vorzugsweise integral mit dem Scharnierbereich 21 ausgebildet. Der Bügelarm 22 weist eine im Wesentlichen dreieckige Form auf, so dass sich die Spitze 22a des dreieckigen Bügelarms 22 bei geschlossenem Zugentlastungsbügel 20 in den Bereich der Kabeldurchführung 13 hinein erstreckt (Fig. 7).

Figur 7 zeigt eine Schnittansicht entlang der Schnittlinie C-C der erfindungsgemäßen Kabelanschlussdose aus Figur 2. Figur 7 zeigt den Zugentlastungsbügel 20 in einem geschlossenen Zustand mit eingelegtem Kabel 10. Die Spitze 22a des Bügelarms 22 drückt dabei derart mittig auf das Kabel 10, dass durch den erhöhten Druck die Zugentlastung verbessert wird und ein Herausziehen oder Herausrutschen des Kabels 10 aus der Kabelanschlussdose 1 sicher verhindert wird.

Der Zugentlastungsbügel 20 weist ferner in seinem Kopfbereich 23 wenigstens ein, vorzugsweise zwei oder mehr Rastelemente 24a, 24b auf. Diese Rastelemente 24a, 24b rasten in einem geschlossenen Zustand des Zugentlastungsbügels 20 in eine Aussparung 17 eines Halteelements 16 ein. Das Halteelement 16 ist vorzugsweise integral mit dem Gehäuse-Unterteil 2 ausgebildet. Wird der Zugentlastungsbügel 20 in Schließrichtung geschwenkt, rastet zunächst das erste Rastelement 24a in die Aussparung ein, der Zugentlastungsbügel 20 befindet sich dann in einer ersten Rastposition. Wird der Zugentlastungsbügel 20 dann noch weiter in Schließrichtung geschwenkt, rastet das zweite Rastelement 24b ein, der Zugentlastungsbügel 20 befindet sich dann in einer zweiten Rastposition.

Durch Schwenken des Zugentlastungsbügels 20 ist es daher einfach möglich, den Zugentlastungsbügel 20 in dem Gehäuse-Unterteil 2 einzurasten und somit schnell und einfach die Zugentlastung zu schließen. Dadurch wird auf besonders einfache Weise ein Herausrutschen beziehungsweise Herausziehen des eingelegten Kabels 10 verhindert. Der Einsatz von Schrauben entfällt gänzlich, sodass einerseits der Arbeitsaufwand zum Schließen und Einstellen des Zugentlastungsbügels 20 verringert und andererseits auch die Anzahl der Bauteile reduziert wird.

Weist der Zugentlastungsbügel mehr als ein Rastelement, vorzugsweise zwei Rastelemente auf, können mehrere Rastpositionen durch einfaches Schwenken des Zugentlastungsbügels eingestellt werden. Dazu wird der Zugentlastungsbügel 20 beispielsweise bei einem großen Kabel 10 in eine erste Rastposition und bei einem kleinen Kabel 10 über die erste Rastposition hinaus in eine zweite Rastposition gebracht. Schrauben werden nicht mehr benötigt und die Teileanzahl und somit auch die Herstellungskosten können reduziert werden. Des Weiteren wird auf einfache Weise eine Zugentlastung zur Verfügung gestellt, die einfach bei Kabeln mit unterschiedlicher Dicke eingesetzt werden kann.

Ferner ist die Aussparung 17 in dem Halteelement 16 des Gehäuse-Unterteils 2 derart ausgebildet ist, dass die Aussparung 17 das Halteelement 16 von der Kabeldurchführung 13 weg durchläuft. Auf diese Weise ist es mittels eines Werkzeugs, beispielsweise eines Schraubendrehers, möglich, das Rastelement 24a, 24b durch die Aussparung 17 hindurch aus dieser herauszubiegen und den Zugentlastungsbügel 20 in den geöffneten Zustand zu schwenken.

Ein zuvor geschlossener und im Gehäuse-Unterteil 2 eingerasteter Zugentlastungsbügel 20 kann auf einfache Weise durch seitliches Einführen beispielsweise eines Schraubendrehers in die Aussparung und dadurch Zurückbiegen des Rastelements aus der Rastposition gelöst und wieder geöffnet werden. Das Lösen von Schrauben oder gar das Zerstören des Zugentlastungsbügels wird gänzlich vermieden. Die Kabelanschlussdose ist daher einfach und schnell zu schließen und zu öffnen und kann mehrfach wiederverwendet werden. Auch das Auswechseln von Kabeln erfolgt mit dem erfindungsgemäßen Zugentlastungsbügels in sehr einfacher Weise.

Der im Wesentlichen buchsenförmige Scharnierbereich 21 des Zugentlastungsbügels 20 weist an dem dem Bügelarm 22 gegenüberliegenden Ende einen Schlitz 25 längs der Schwenkbewegung des Zugentlastungsbügels 20 auf. Vorzugsweise erstreckt sich wenigstens von einem Ende des Schlitzes 25 eine Lasche 26 in radialer Richtung von dem Schwenkteil 15 weg. Diese Lasche 26 steht somit im Wesentlichen senkrecht von dem buchsenförmigen Scharnierbereich 21 hervor. In einem geöffneten Zustand des Zugentlastungsbügels 20 schnappt diese Lasche 26 vorzugsweise über ein federndes Element 18, so dass der Zugentlastungsbügel 20 in dem geöffneten Zustand arretiert ist (Fig. 6). Der eingerastete Zustand des Zugentlastungsbügels 20, also der Lasche 26 mit dem federnden Element 18, kann beispielsweise durch horizontales Aufschieben des Zugentlastungsbügels 20 auf das Schwenkteil 15 herbeigeführt werden. Die Lasche 26 ist vorzugsweise integral mit dem Zugentlastungsbügel ausgebildet. Das federnde Element 18 ist vorzugsweise integral mit dem Gehäuse-Unterteil 2 ausgebildet.

Auf diese Weise wird es ohne zusätzliche Mittel ermöglicht, den Zugentlastungsbügel 20 beispielsweise während eines Transports in einem geöffneten Zustand zu halten. Ein versehentliches Schwenken und Einrasten des Zugentlastungsbügels 20 wird somit vermieden. Dadurch kann die Kabelanschlussdose 1 an ihrem Bestimmungsort direkt verbaut werden, ohne einen Zugentlastungsbügel zunächst an dem Gehäuse-Unterteil 2, also an das Schwenkteil 15 einzurasten. Ebenso kann auf eine Verliersicherung verzichtet werden, da der Zugentlastungsbügel 20 bereits bei der Auslieferung auf dem Schwenkteil 15 befestigt ist. Dies führt somit zu einer verbesserten und vereinfachten Handhabung und Montierbarkeit der Kabelanschlussdose.

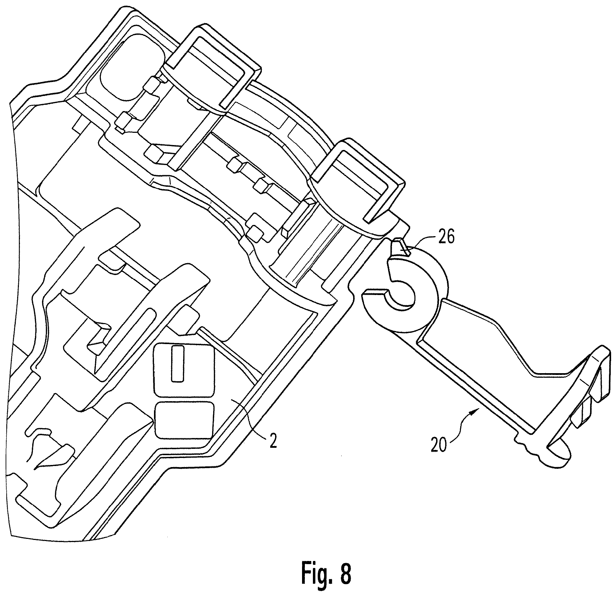

In einer besonders vorteilhaften Ausführungsform ist der Zugentlastungsbügel 20 am Gehäuse-Unterteil 2 mitgespritzt. Dies ist beispielhaft in Figur 8 gezeigt. Die das Kunststoffgehäuse 2, 3 und den Zugentlastungsbügel 20 verbindenden Bereiche bilden die Laschen 26 zum Arretieren des Zugentlastungsbügels 20 in einem geöffneten Zustand. Die Laschen 26 sind so gebildet, dass sie bei Abreißen des Zugentlastungsbügels 20 von dem Kunststoffgehäuse 2, 3 nach dem Spritzgießvorgang wie oben beschrieben an dem Zugentlastungsbügel 20 ausgebildet sind.

Durch die so ausgebildeten Laschen 26 werden einerseits Arbeitsschritte bei der Herstellung der Kabelanschlussdose 1 eingespart. Andererseits werden die Laschen 26 auf diese Weise einfach integral mit dem Zugentlastungsbügel 20 sowie dem Gehäuse 2, 3 ausgebildet bzw. mitgespritzt und dienen schließlich, wie oben bereits erläutert, zum Arretieren des Zugentlastungsbügels 20 am Kunststoffgehäuse 2, 3 in einem geöffneten Zustand im Auslieferungszustand. Eine zusätzliche Bearbeitung der Kunststoffteile entfällt somit.

### Bezugszeichenliste:

- (1): Kabelanschlussdose
- (2): Gehäuse-Unterteil
- (3): Gehäuse-Deckel
- (4): Gelenk
- (5): Schließmechanismus
- (5a): Falle
- (5b): Riegel
- (6): Kontaktelement
- (7): Schraubklemmelement
- (8): Kammer
- (9): Stanzteil
- (9a): erster Verbinder
- (9b): zweiter Verbinder
- (10): (Anschluss-) Kabel
- (10a): Leiterdraht/Ader
- (11): Bremssteg
- (12): Erdungskontakt
- (12a): Keilbereich
- (12b): Verbindungsbereich
- (12c): Kontaktbereich
- (12d): Klemmbereich
- (13): Kabeldurchführung
- (13a): halbkreisförmiger Bereich
- (13b): Aussparung
- (14): Verstärkung
- (15): Schwenkteil
- (16): Halteelement
- (17): Aussparung
- (18): federndes Element
- (19a): Öffnung (für Erdungskontakt)
- (19b): Haltebereich
- (20): Zugentlastung/Zugentlastungsbügel
- (21): Scharnierbereich
- (22): Bügelarm
- (22a): Spitze des Bügelarms
- (23): Kopfbereich des Zugentlastungsbügels
- (24a): erstes Rastelement
- (24b): zweites Rastelement
- (25): Schlitz
- (26): Lasche

## Patentansprüche

1. Kabelanschlussdose zur Verbindung der Adern (10a) eines Anschlusskabels (10) mit weiterführenden elektrischen Leitungen an einem elektrischen Gerät, aufweisend:
ein Gehäuse-Unterteil (2) und einen Gehäuse-Deckel (3), wenigstens ein Kontaktelement (6) des Anschlusskabels (10), aufweisend wenigstens ein Stanzteil (9) zur Kontaktherstellung, und
einen Erdungungskontakt (12);
**dadurch gekennzeichnet, dass**
der Erdungskontakt (12) sich an der Unterseite des Gehäuse-Unterteils (2) von dem Gehäuse-Unterteil (2) weg erstreckt, und
der Erdungskontakt (12) als Direkterdung, also als schraubloser Erdungskontakt, ausgelegt ist.

2. Kabelanschlussdose nach Anspruch 1, wobei der Erdungskontakt (12) bogenförmig ausgebildet ist und sich von der Unterseite des Gehäuse-Unterteils (2) weg und wieder zu diesem zurück erstreckt.

3. Kabelanschlussdose nach Anspruch 2, wobei das sich zurückerstreckenden Ende des Erdungskontakts (12) in das Gehäuse-Unterteil (2) eingerastet ist.

4. Kabelanschlussdose nach einem der vorhergehenden Ansprüche, wobei sich der Erdungskontakt (12) bis zum Stanzteil (9) erstreckt.

5. Kabelanschlussdose nach Anspruch 4, wobei der Erdungskontakt (12) sich mit seinem dem Stanzteil (9) abgewandten Ende in das Gehäuse-Unterteil (2) hineinerstreckt und von dem Gehäuse-Unterteil (2) gehalten wird.

6. Kabelanschlussdose nach einem der vorhergehenden Ansprüche, wobei der Erdungskontakt (12) integral mit dem Stanzteil (9) ausgebildet ist.

7. Kabelanschlussdose nach einem der vorhergehenden Ansprüche, ferner aufweisend:
eine Kabeldurchführung (13) für das Anschlusskabel (10), und
eine Zugentlastung in der Kabeldurchführung (13) zum Arretieren des Anschlusskabels (10) in der Kabelanschlussdose (1),
wobei die Zugentlastung einen drehbar gelagerten Zugentlastungsbügel (20) aufweist.

8. Kabelanschlussdose nach Anspruch 7, wobei an dem Zugentlastungsbügel (20) integral wenigstens ein Rastelement (24a, 24b) ausgebildet ist, zum Einrasten des Zugentlastungsbügels (20) in das Gehäuse-Unterteil (2) und bei eingelegtem Kabel (10) in wenigstens einer Rastposition.

9. Kabelanschlussdose nach Anspruch 8, wobei an dem Zugentlastungsbügel (20) zwei Rastelemente (24a, 24b) ausgebildet sind, wobei die Rastelemente (24a, 24b) in eine im Gehäuse-Unterteil (2) ausgebildeten Aussparung (17) derart einrasten, dass sich der Zugentlastungsbügel (20) in einer ersten Rastposition (24a) befindet, wenn das erste Rastelement in die Aussparung (17) eingerastet ist, und sich der Zugentlastungsbügel (20) in einer zweiten, von der ersten unterschiedlichen Rastposition befindet, wenn das zweite Rastelement (24b) in dieser Aussparung (17) eingerastet ist.

10. Kabelanschlussdose nach Anspruch 9, wobei die Aussparung (17) in einem Halteelement (16) des Gehäuse-Unterteils (2) derart ausgebildet ist, dass die Aussparung (17) das Halteelement (16) von der Kabeldurchführung (13) weg durchläuft.

11. Kabelanschlussdose nach einem der Ansprüche 7 bis 10, wobei an dem Zugentlastungsbügel (20) integral wenigstens eine Lasche (26) ausgebildet ist, die in geöffnetem Zustand des Zugentlastungsbügels (20) mit einem an dem Gehäuse-Unterteil (2) integral ausgebildetem federnden Element (18) eingerastet ist, so dass der Zugentlastungsbügel (20) in dieser geöffneten Position gehalten wird.

12. Kabelanschlussdose nach einem der Ansprüche 7 bis 11, wobei der Zugentlastungsbügel (20) eine im Wesentlichen dreieckige Form aufweist, dessen Spitze (22a) sich bei geschlossenem Zugentlastungsbügel (20) in den Bereich der Kabeldurchführung (13) hinein erstreckt.

13. Kabelanschlussdose nach einem der Ansprüche 7 bis 12, wobei der Zugentlastungsbügel (20) am Kunststoffgehäuse (2, 3) mitgespritzt ist.

14. Kabelanschlussdose nach Anspruch 13, wobei die Laschen (26) nach dem Spritzgiessvorgang die Verbindung zwischen dem Kunststoffgehäuse (2, 3) und dem Zugentlastungsbügel (20) bilden.

15. Kabelanschlussdose nach einem der vorhergehenden Ansprüche, wobei das wenigstens eine Kontaktelement (6) ferner wenigstens ein Schraubklemmelement (7) aufweist,
wobei ein erster Verbinder (9a) des Stanzteils (9) abgeschrägt und ein Bremssteg (11) an dem abgeschrägten Bereich des ersten Verbinders (9a) im Gehäuse-Unterteil (2) integral ausgebildet ist, so dass das Schraubklemmelement (7) bei eingelegtem Stanzteil (9) in das Gehäuse-Unterteil (2) auf dem Bremssteg (11) aufliegt.

## Claims

1. A cable connector box for connecting the leads (10a) of a connector cable (10) to continuing electric lines at an electrical appliance, comprising:
a housing base (2) and a housing cover (3), at least one contact element (6) of the connector cable (10), comprising at least one stamped part (9) for establishing a contact, and
a grounding contact (12);
**characterized in that**
the grounding contact (12) extends on the lower side of the housing base (2) away from the housing base (2), and
the grounding contact (12) is in the form of a direct grounding, i.e. of a non-screwed grounding contact.

2. The cable connector box according to claim 1, wherein the grounding contact (12) has a curved shape and extends away from and returns to the lower side of the housing base (2).

3. The cable connector box according to claim 2, wherein the end of the returning grounding contact (12) is engaged in the housing base (2).

4. The cable connector box according to any one of the preceding claims, wherein the grounding contact (12) extends up to the stamped part (9).

5. The cable connector box according to claim 4, wherein the grounding contact (12) with its end facing away from the stamped part (9) extends into the housing base (2) and is retained by the housing base (2).

6. The cable connector box according to any one of the preceding claims, wherein the grounding contact (12) is formed integrally with the stamped part (9).

7. The cable connector box according to any one of the preceding claims, further comprising:
a cable bushing (13) for the connector cable (10), and
a strain relief within the cable bushing (13) for locking the connector cable (10) in the cable connector box (1),
wherein the strain relief includes a rotatably supported strain relief clip (20).

8. The cable connector box according to claim 7, wherein at least one locking element (24a, 24b) is formed integrally with the strain relief clip (20), for locking the strain relief clip (20) in the housing base (2) and in at least one locking position, when the cable (10) is inserted.

9. The cable connector box according to claim 8, wherein two locking elements (24a, 24b) are configured on the strain relief clip (20), wherein the locking elements (24a, 24b) engage in a recess (17) formed in the housing base (2) such that the strain relief clip (20) is present in a first locking position (24a), when the first locking element is engaged in the recess (17) and the strain relief clip (20) is present in a second locking position different from the first locking position, when the second locking element (24b) is engaged in said recess (17).

10. The cable connector box according to claim 9, wherein the recess (17) is configured in a retaining element (16) of the housing base (2) such that the recess (17) passes through the retaining element (16) away from the cable bushing (13).

11. The cable connector box according to any one of the claims 7 to 10, wherein at the strain relief clip (20) at least one tab (26) is integrally formed which in the opened state of the strain relief clip (20) is engaged with a resilient element (18) formed integrally on the housing base (2) so that the strain relief clip (20) is retained in said opened position.

12. The cable connector box according to any one of the claims 7 to 11, wherein the strain relief clip (20) takes a substantially triangular shape the point (22a) of which extends into the area of the cable bushing (13) when the strain relief clip (20) is closed.

13. The cable connector box according to any one of the claims 7 to 12, wherein the strain relief clip (20) is fastened to the plastic housing (2, 3) by injection-molding.

14. The cable connector box according to claim 13, wherein after injection-molding the tabs (26) form the connection between the plastic housing (2, 3) and the strain relief clip (20).

15. The cable connector box according to any one of the preceding claims,
wherein the at least one contact element (6) further includes at least one screw clamp member (7),
wherein a first connector (9a) of the stamped part (9) is beveled and a brake rod (11) is formed integrally with the beveled area of the first connector (9a) in the housing base (2) so that the screw clamp member (7) rests on the brake rod (11) when the stamped part (9) is inserted in the housing base (2).

## Revendications

1. Boîte de connexion de câble pour la liaison des brins (10a) d'un câble de connexion (10) avec des lignes électriques de prolongement au niveau d'un appareil électrique, présentant :
une partie inférieure de boîtier (2) et un couvercle de boîtier (3), au moins un élément de contact (6) du câble de connexion (10), présentant au moins une pièce découpée (9) pour la mise en contact, et
un contact de mise à la terre (12) ;
**caractérisée en ce que**
le contact de mise à la terre (12) s'étend au niveau de la face inférieure de la partie inférieure de boîtier (2) en s'éloignant de la partie inférieure de boîtier (2), et
le contact de mise à la terre (12) est conçu en tant que mise à la terre directe, donc en tant que contact de mise à la terre sans vis.

2. Boîte de connexion de câble selon la revendication 1, dans laquelle le contact de mise à la terre (12) est réalisé en forme d'arc et s'étend en s'éloignant de la face inférieure de la partie inférieure de boîtier (2) et en revenant vers celle-ci.

3. Boîte de connexion de câble selon la revendication 2, dans laquelle l'extrémité revenant en arrière du contact de mise à la terre (12) est enclenchée dans la partie inférieure de boîtier (2).

4. Boîte de connexion de câble selon l'une quelconque des revendications précédentes, dans laquelle le contact de mise à la terre (12) s'étend jusqu'à la pièce découpée (9).

5. Boîte de connexion de câble selon la revendication 4, dans laquelle le contact de mise à la terre (12) s'étend avec son extrémité opposée à la pièce découpée (9) dans la partie inférieure de boîtier (2) et est retenu par la partie inférieure de boîtier (2).

6. Boîte de connexion de câble selon l'une quelconque des revendications précédentes, dans laquelle le contact de mise à la terre (12) est réalisé d'un seul tenant avec la pièce découpée (9).

7. Boîte de connexion de câble selon l'une quelconque des revendications précédentes, présentant en outre :
un passe-câble (13) pour le câble de connexion (10), et
une décharge de traction dans le passe-câble (13) pour bloquer le câble de connexion (10) dans la boîte de connexion de câble (1),
dans laquelle la décharge de traction présente un étrier de décharge de traction logé de manière rotative (20).

8. Boîte de connexion de câble selon la revendication 7, dans laquelle au moins un élément d'enclenchement (24a, 24b) est réalisé d'un seul tenant au niveau de l'étrier de décharge de traction (20), pour l'enclenchement de l'étrier de décharge de traction (20) dans la partie inférieure de boîtier (2) et lorsque le câble (10) est inséré dans au moins une position d'enclenchement.

9. Boîte de connexion de câble selon la revendication 8, dans laquelle deux éléments d'enclenchement (24a, 24b) sont réalisés au niveau de l'étrier de décharge de traction (20), dans laquelle les éléments d'enclenchement (24a, 24b) s'enclenchent dans un évidement (17) réalisé dans la partie inférieure de boîtier (2) de telle sorte que l'étrier de décharge de traction (20) se trouve dans une première position d'enclenchement (24a), lorsque le premier élément d'enclenchement est enclenché dans l'évidement (17), et l'étrier de décharge de traction (20) se trouve dans une deuxième position d'enclenchement différente de la première, lorsque le deuxième élément d'enclenchement (24b) est enclenché dans cet évidement (17).

10. Boîte de connexion de câble selon la revendication 9, dans laquelle l'évidement (17) est réalisé dans un élément de retenue (16) de la partie inférieure de boîtier (2) de telle sorte que l'évidement (17) traverse l'élément de retenue (16) en s'éloignant du passe-câble (13).

11. Boîte de connexion de câble selon l'une quelconque des revendications 7 à 10, dans laquelle au moins une languette (26) est réalisée d'un seul tenant au niveau de l'étrier de décharge de traction (20), laquelle s'enclenche à l'état ouvert de l'étrier de décharge de traction (20) avec un élément élastique (18) réalisé d'un seul tenant au niveau de la partie inférieure de boîtier (2), de sorte que l'étrier de décharge de traction (20) est retenu dans cette position ouverte.

12. Boîte de connexion de câble selon l'une quelconque des revendications 7 à 11, dans laquelle l'étrier de décharge de traction (20) présente une forme sensiblement triangulaire, dont la pointe (22a) s'étend dans la zone du passe-câble (13) lorsque l'étrier de décharge de traction (20) est fermé.

13. Boîte de connexion de câble selon l'une quelconque des revendications 7 à 12, dans laquelle l'étrier de décharge de traction (20) est co-formé par injection sur le boîtier en plastique (2, 3).

14. Boîte de connexion de câble selon la revendication 13, dans laquelle les languettes (26) forment après l'opération de moulage par injection la liaison entre le boîtier en plastique (2, 3) et l'étrier de décharge de traction (20).

15. Boîte de connexion de câble selon l'une quelconque des revendications précédentes, dans laquelle l'au moins un élément de contact (6) présente en outre au moins un élément de borne à vis (7),
dans laquelle un premier connecteur (9a) de la pièce découpée (9) est chanfreiné et une nervure de freinage (11) est réalisée d'un seul tenant au niveau de la zone chanfreinée du premier connecteur (9a) dans la partie inférieure de boîtier (2), de sorte que l'élément de borne à vis (7) repose sur la nervure de freinage (11) lorsque la pièce découpée (9) est insérée dans la partie inférieure de boîtier (2).
